# EUROPÄISCHE PATENTANMELDUNG

(11) **EP 2 189 561 A1**
(43) Veröffentlichungstag der Anmeldung: **26.05.2010**
(21) Anmeldenummer: 09011743.3
(22) Anmeldetag: 15.09.2009
(51) Int. Cl.: D04H 1/42, D04H 1/46, F16J 15/00, F16J 15/12, F16L 23/18, H01J 9/26, D04H 13/00, F16J 15/08

(54) **Flachdichtung**

(30) Priorität: 28.10.2008 DE 102008053528
(71) Anmelder: Carl Freudenberg KG, 69469 Weinheim (DE)
(72) Erfinder: Groten, Robert, 68280 Sundhoffen (FR); Schneider, Ralf, 67814 Dannenfels (DE)

(57) **Zusammenfassung**

Flachdichtung zwischen zwei Gerätetellen, insbesondere zwischen einem Gehäuse und einem daran befestigten Sichtfenster, wobei die Dichtung aus einem Vliesstoff aus Mikrofilamenten oder Mikrofasern mit einem Titer von unter 0,15 dtex besteht.

## Beschreibung

### Technisches Gebiet

Die Erfindung befasst sich mit einer Flachdichtung zwischen zwei Geräteteilen, insbesondere zwischen einem Gehäuse und einem daran befestigten Sichtfenster.

### Stand der Technik

Die Verwendung von Flachdichtungen ist sehr vielseitig. Dabei geht es darum, das Innere eines Gerätes vor einer Verschmutzung von außen durch Staubpartikel oder dergleichen zu schützen. Auch werden sie eingesetzt, um das Eindringen von Wasser in den Innenrahmen des Gerätes zu vermeiden. Einsatzgebiete sind u.a. auch Displays und hier insbesondere Mobiltelefone^{c} oder auch so genannte Laptops. Das Eindringen von Staub in das Gerät und damit eine Verschmutzung des Fensters von innen, ist in jedem Falle zu vermeiden. Die hier eingesetzten Gummidichtungen erfüllen nicht in jedem Falle den gewünschten Zweck.

### Darstellung der Erfindung

Der Erfindung liegt die Aufgabe zugrunde, hier Abhilfe zu schaffen und eine Flachdichtung zu erstellen, die mit hoher Wirksamkeit das Eindringen von Staubpartikeln in den Innenraum des Geräts verhindert.

Die Lösung der gestellten Aufgabe wird mit den Merkmalen des Anspruchs 1 erreicht. Die Unteransprüche 2 bis 6 stellen vorteilhafte Weiterbildungen des Erfindungsgedankens dar.

Der Grundgedanke der Erfindung besteht darin, dass die Flachdichtung aus einem Vliesstoff aus Mikrofilamenten oder Mikrofasern besteht, wobei die Mikrofilamente oder Mikrofasern einen Titer von unter 0,15 dtex haben. Es zeigte sich, dass es möglich ist, einen solchen Vliesstoff für Dichtzwecke zu benutzen und dabei eine äußerst hohe Dichtigkeit zu erreichen. Außerdem ist es möglich, diese Dichtung äußerst flach auszuführen und dadurch die bei vielen Geräten gewünschte Flachheit der Fensterbefestigung zu gewährleisten.

Um die Stabilität der Dichtung und ihre Handhabbarkeit während der Verarbeitung sicherzustellen, ist es günstig, wenn der Vliesstoff ein Flächengewicht von über 60 g/m² hat. Dabei wird ein Gewichts-CV von unter 7% angestrebt. Bei hohen Festigkeitsanforderungen ist es vorteilhaft, wenn Mikrofilamente eingesetzt werden.

Die Mikrofilamente können in an sich bekannter Weise durch das Aufsplitten von Monofilamenten hergestellt werden. Dabei ist es günstig, wenn hier die Kombination von Polyester und Polyamid verwendet wird. Die Bikomponentenfilamente werden zu einem Vliesstoffverbund zusammengefasst. Anschließend ist eine Wasserverfestigung vorgesehen, die verlustfrei ist und einen fusselfreien Vliesstoff ergibt. Hierdurch erhält der Vliesstoff die gewünschte Festigkeit und Glätte.

Für den Einsatz der Dichtung am Gerät ist es günstig, wenn die Dichtung formschlüssig und nahtlos an mindestens einem der abzudichtenden Geräteteile gehalten wird. Hierfür kann das Gerät bzw. auch das Fenster des Geräts mit entsprechenden Abstufungen, Nuten oder dergleichen versehen sein.

In Versuchen zeigte sich, dass eine besonders gute Abdichtung dann erreicht wird, wenn die aus Vliesstoff bestehende Dichtung zusammen mit einer weiteren Dichtung aus einem elastomeren Material angewendet wird. Dabei werden die Vliesstoffdichtung und die Elastomerdichtung übereinander gelegt.

Die Herstellung der Vliesstoffdichtung wird zweckmäßiger Weise durch Ausstanzen aus einer flächigen Bahn durchgeführt.

Der besondere Vorteil der mikrotextilen Dichtung ist darin zu sehen, dass die Dichtung einen Austausch von Luftfeuchtigkeit erlaubt und dadurch einen Kondensations- oder Staubniederschlag bei einem Wechsel der Umgebungstemperatur verhindert.

### Ausführung der Erfindung

Ein Mikrofilamentvliesstoff mit einem Flächengewicht von 100 g/m² wurde gemäß dem Patent DE 697 25 051.2 hergestellt und nachträglich blau gefärbt. Dabei lockert sich die Struktur und die Dichte steigt von ca. 0,5 mm auf ca. 0,6 mm.

Von einem demgemäß hergestellten Mikrofilamentvlies ist im unverdichteten Zustand eine Bamere-Effizienz von >99% bei Partikeln von 1 µm bekannt. Diese Vliese finden auch Verwendung als Allergen-Barriere-Bettwäsche.

Der so erhaltene Vliesstoff wurde von Hand in Form eines Display-Rahmens eines Handys, nahtlos und ca. 2 mm breit zugeschnitten, auf die vorhandene Elastomer-Dichtung gelegt und das Gehäuse bei leichtem Anpressdruck der aufeinandergelegten Dichtungen zusammenschnappen gelassen. Dabei wurde der verwendete Vliesstoff ca. 30% bis 50% seiner ursprünglichen Dicke komprimiert. Nach der hier beschriebenen Anwendung wurde kein Einstauben der Display-Scheiben-Innenseite mehr festgestellt. Auch ein Kondensieren der Fenster-Innenseite wurde nicht festgestellt.

## Patentansprüche

1. Flachdichtung zwischen zwei Geräteteilen, insbesondere zwischen einem Gehäuse und einem daran befestigten Sichtfenster, **dadurch gekennzeichnet, dass** die Dichtung aus einem Vliesstoff aus Mikrofilamenten oder Mikrofasern mit einem Titer von unter 0, 15 dtex besteht.

2. Flachdichtung nach Anspruch 1, **dadurch gekennzeichnet, dass** der Vliesstoff ein Flächengewicht von über 60 g/m² hat.

3. Flachdichtung nach einem der Ansprüche 1 oder 2, **dadurch gekennzeichnet, dass** der Vliesstoff aus einem Verbund von Polyestermikrofilamenten und Polyamidmikrofilamenten besteht.

4. Flachdichtung nach einem der Ansprüche 1 bis 3, **dadurch gekennzeichnet, dass** die Dichtung formschlüssig und nahtlos an mindestens einem der abzudichtenden Geräteteile gehalten ist.

5. Flachdichtung nach einem der Ansprüche 1 bis 4, **dadurch gekennzeichnet, dass** die Dichtung zusammen mit einer weiteren Dichtung aus einem elastomeren Material angeordnet ist.

6. Flachdichtung nach einem der Ansprüche 1 bis 5, **dadurch gekennzeichnet, dass** die Dichtung aus Vliesstoff und die Dichtung aus einem Elastomer übereinander gelegt sind.
